Europäisches Patentamt

European Patent Office

Office européen des brevets

(11) Publication number: **0 458 756 A1**

# EUROPEAN PATENT APPLICATION

(21) Application number: **91830166.4**

(22) Date of filing: **23.04.91**

(51) Int. Cl.⁵: **G06F 1/32, G06F 13/32**

(30) Priority: **26.04.90 IT 8361890**

(43) Date of publication of application:
**27.11.91 Bulletin 91/48**

(84) Designated Contracting States:
**DE FR GB SE**

(71) Applicant: **SGS-THOMSON MICROELECTRONICS s.r.l.**
**Via C. Olivetti, 2**
**I-20041 Agrate Brianza Milano (IT)**

(72) Inventor: **Scarra', Flavio**
**Via Lecco, 54**
**I-20041 Agrate Brianza (IT)**

(74) Representative: **Pellegri, Alberto et al**
**c/o Società Italiana Brevetti S.p.A. Via Cavour, 9**
**I-21100 Varese (IT)**

(54) **Data transfer in DMA mode during a wake up phase of a microprocessor in a wait for interrupt condition for reducing power consumption.**

(57)   In a microprocessor system provided with integrated DMA channels for transferring data from peripherals associated with the microprocessor and internal and/or external data storage physical resources of the microprocessor system and viceversa, a request for a data transfer in DMA mode is accepted also during a wait for interrupt (WFI) state of the microprocessor, whose CPU is momentarily restored to full operativity for the time necessary for completing the data transfer in DMA mode before being returned to the "power down" condition of a wait for interrupt state. Power consumption is reduced and data transactions are performed swiftly.

EP 0 458 756 A1

FIG.1

## BACKGROUND OF THE INVENTION

The present invention relates to an integrated microprocessor system provided with DMA (Direct Memory Access) channels for implementing high-speed data trasfer between peripherals associated with the microprocessor and internal and/or external data storage physical resources of the microprocessor system, wherein the data transfer in DMA mode may advantageously take place during a WFI (Wait For Interrupt) state of the microprocessor.

In a large number of applications of microprocessor systems (e.g. microcomputers or microcontrollers) and in particular in the case of battery powered systems, the power consumption of the microprocessor system assumes a great importance and it is necessary to adopt measures and special fabrication technologies for reducing as much as possible the consumption.

The great majority of microprocessors contemplate a peculiar instruction, commonly known as Wait For Interrupt (WFI, as an acronym), by means of which the execution of a running program is suspended until a request for interrupt is acknowledged. Such an instruction may be generated by internal resources of the microprocessor or through external channels. During a WFI instruction, the inner (CORE) clock of the microprocessor is stopped, while the clock controlling the peripherals continues to run. In this condition, the energy consumption of the device is reduced by an amopunt which is attributable to the processor itself, i.e. to the CPU (an acronym for Central Processing Unit) which is controlled by the CORE clock and the microprocessor is placed in a stand-by condition, i.e. waiting for a certain event which requires an interruption in the execution of the program though remaining operative and alert toward the peripherals which are associated therewith.

On the other hand, he availability of microprocessors provided with integrated DMA channels for high-speed transfer of data to and from the microprocessor, has greatly increased the speed and made more linear the data flow within the system. Every peripheral which is associated with the microprocessor may utilize one or several dedicated DMA channels which are integrated within the microprocessor device.

Each DMA channel trasfers data to and from the Set of Registers, the Program Memory and the Data Memory of the microprocessor. By Register Set is intended the totality of registers of the microprocessors and therefore of the I/O gates themselves, the peripherals and the Register File. In practice, a peripheral may be either the syncronizing device of such a transfer or the source or the destination of the data transfer. Every DMA channel is generally capable of effecting a certain number of transactions in relation to the fact that the Set of Registers or the Program Memory or the Data Memory be selected.

In known microprocessors, a DMA data tranfer request is accepted only after the microprocessor has been recalled to a state of full operativity by a preceding request for interrupt command. Therefore a condition of Wait For Interrupt (WFI) is assumed by the microprocessor every time the execution of the program instruction is suspended for awaiting an event which requires an interrupt; the transaction in a DMA made of a block of data to/from the Set of Registers, from/to the Program Memory or the Data Memory of the microprocessor representing a typical event which requires an interrupt.

## SUMMARY OF THE INVENTION

It has now been found that the remarkable energy saving which is normally accomplished in a WFI condition, may be advantageously maintained, while ensuring a full functionality of peripherals by managing them through the DMA channels. This is accomplished by procuring that the microprocessor be momentarily restored to a full operating condition by the same request for a transfer of a block of data in DMA mode until the transaction is completed, and to return the microprocessor in a condition of reduced power consumption of a Wait For Interrupt condition upon the termination of the DMA transaction. In this way, the procedures for transferring data in DMA mode are executed outside the control of the resident assembler program, by simply employing a counter capable of recognizing when the transfer of the last data is completed and which generates a signal of request for an interrupt for the CPU of the microprocessor.

The transfer of data in DMA mode comprises basically three steps:

- loading from/to the data register of the peripheral to/from a location within the Register File (or of the Memory) addressed through a DMA Address Register (or Register pair);

- a post increment of the DMA Address Register (or Register pair)

- a post-decrement of a DMA transaction counter, which contains the number of transactions which have still to be performed.

If the transfer in DMA mode is done between a peripheral and the Register File, one register is required to point the DMA Address Register and one to point the DMA Transaction Counter. These two registers must be located in the Register File in positions adjacent to one another: the DMA Address Register located in an even position and the relative DMA Transaction Counter in an odd position. The pair of registers may then be "pointed" by a DMA Transaction Counter Pointer Register (DCPR) and by a DMA Address Pointer Register (DAPR), respectively, and which are located in the paged registers of the relative peripheral unit.

The Trasfer Counter Register must be initialized with the number of transactions to perform and it will be decremented after each transaction. The DMA Address Register must be initialized with the starting address of the DMA table and will be increased after each transaction.

Also in the case the transaction must be done between a peripheral and the Memory (Program Memory and Data Memory) of the microprocessor, a pair of registers is required for the DMA Address and a pair of registers for the DMA Transaction Counter. These two pairs of registers must be located in the Register File of the microprocessor.

The DMA Transaction Counter is pointed by the respective DMA Transaction Counter Pointer Register (DCPR). The DMA Address Register is pointed by the respective DMA Address Pointer Register (DAPR). Both pointer registers are located in the paged registers of the peripheral unit.

Once the DMA table is completed (i.e. the transaction counter is decremented to zero), an interrupt request to the CPU is generated.

The DMA Transaction Counter Register must be initialized with the number of transactions to perform and will be decremented after each transaction. The DMA Address Register must be initialized with the starting address of the DMA table and will be incremented after each transaction. Once a DMA channel is initialized, a transfer can start. The direction of the transfer is automatically defined by the type of peripheral involved.

Operatively, in a microprocessor, if the DMA mask bit is set to "1" when a Request Pending bit is set to 1 (by hardware event or software), a DMA request is generated. If the priority level of the DMA source is higher or equal to the priority level under service (CPL), the DMA tranfer is executed at the end of the current instruction. The data transfer in DMA mode reads/writes data from/to the location pointed by the DMA address Register, increments the DMA Address Register and decrements the Transaction Counter Register.

When the content of the Transaction Counter is decremented to zero, the DMA mask bit is cleared and an interrupt request is generated by the generation of an interrupt mask bit (End-Of-Interrupt). This End-Of-Block interrupt request is taken into account depending on the Request Pending bit value.

Interrupt and DMA transaction requests are sampled every certain number (n) of internal (CORE) clock cycles before the end of the current instruction. If a Wait For Interrupt condition is in progress, requests of interrupt and of transfer of data in DMA mode are sampled every number (n-1) of internal clock cycles.

In case the request for interrupt or for a transfer of data in DMA mode comes from an external pin of the microprocessor, the programmed event has to be occurred at least one external clock cycle before the sampling instant.

A transfer of data in DMA mode, whether it interests the Register File or the microprocessor's Memory, takes place in a certain number of cycles of the internal clock in the case the transfer takes place with the microprocessor in a full state of operativity, while the same transfer of data in a DMA mode in case it takes place, in accordance with the present invention, during a Wait For Interrupt state of the microprocessor, is performed in a number of internal clock cycles greater by only two cycles than the number of cycles which are required in a transfer of data during a phase of full operativity state of the microprocessor.

It is evident the advantage which is achieved by permitting the transfer of data in DMA mode during a Wait For Interrupt (low power consumption phase) also in terms of speeding up the process. In fact, in the known microprocessors, the same process of data tranfer would take place through a request for interrupt and the carrying out of a certain number of instructions of the assembler program resident in the memory of the microprocessor in order to complete the data transfer.

## BRIEF DESCRIPTION OF THE DRAWINGS

**Figure 1** is a general block diagram of a microcomputer or microcontroller made in accordance with the present invention.

**Figure 2** is a logic diagram of a first type of cell for generating two distinct clock signals.

**Figure 3** is a logic diagram of a second type of cell for generating a clock signal.

**Figure 4** is a logic diagram of a third type of cell for generating a clock signal.

## DESCRIPTION OF THE BEST MODE

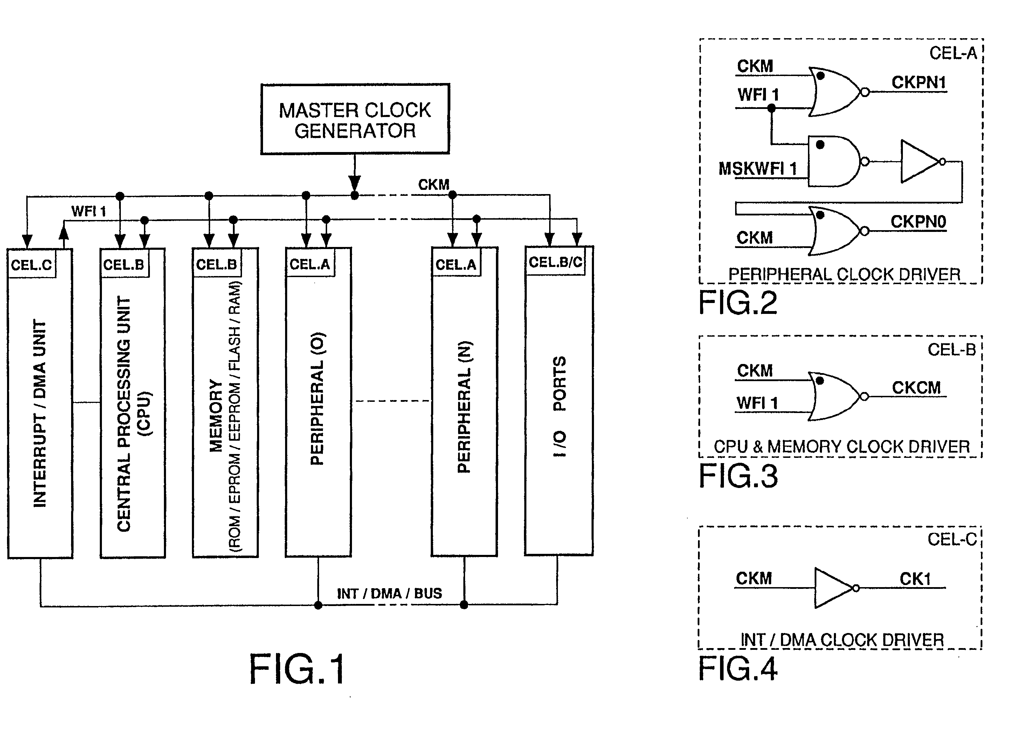

With reference to the diagram of **Fig. 1**, each macroblock forming the microcontroller is provided with a circuit or cell capable of generating one or several secondary clock signals utilized by the relative macroblock of the integrated microcontroller, which cell is driven by a **MASTER CLOCK GENERATOR** whose signal **CKM** is delivered to one or more inputs of each one of said secondary clock signal generating cells.

A first macroblock depicted in **Fig. 1** is the **INTERRUPT/ DMA UNIT** block which comprises the control circuitry capable of managing the request for interrupt following a **WFI** soft-ware instruction decoded by the CENTRAL PROCESSING UNIT block. The **INTERRUPT/DMA UNIT** block transforms such a request into an operative action by activating the signal **WFI1**.

The other macroblocks depicted in the diagram of **Fig. 1** are, respectively: the memory block **MEMORY**

ROM/EPROM/EEPROM/ FLASH/RAM, a first block of circuitry, **PERIPHERAL 0**, for the management of a first peripheral unit, a further block of circuitry, **PERIPHERAL N**, for the management of another peripheral unit, and a block of circuitry **I/O PORTS** for the management of the inputs and the outputs of the system, . A control bus of the "interrupt" and **DMA** procedures, connects the control block **INTERRUPT/DMA UNIT** to the peripherals of the microcontroller.

The different types of cells wihich generates the respective clock signals for each circuital macroblock are essentially three: the **A** type (**CELL_A**), the **B** type (**CELL_B**) and the **C** type (**CELL_C**).

The first type of cell (**CELL_A**) is present in all the blocks of circuitry for the management of peripherals, and has a functional logic diagram as the one depicted in **Fig. 2**. This cell generates two secondary clock signals. A first secondary clock signal **CKPNI** is utilized exclusively for managing the peripheral unit from the point of view of its interfacing with the **CPU**. Therefore, all the physical data storage resources such as registers of the peripheral unit utilize of this first secondary clock signal **CKPNI**, which is stopped as long as a state of **WFI** , is in progress, as confirmed by the state of the relative signal **WFI1** generated by the **INTERRUPT/DMA** UNIT block. Moreover, the cell generates a second secondary clock signal **CKPNO**, which is utilized for the functioning of the peripheral unit and continues to be generated by the cell also during a **WFI** phase. For example, if the peripheral in question is a serial communication interface, this second secondary clock signal will be provided to the Baud Rate generator, to the circuit in charge of controlling the inputs and the outputs of signals and to the signal managing the request for interrupt and for **DMA** transactions of the peripheral unit. Furthermore the cell is provided with an input for a control bit (**MSKWFI1**) which is provided by a register belonging to the peripheral unit itself, through which it is possible, by stopping the generation also of said second secondary clock signal **CKPNO** to render the peripheral unit operative or nonoperative. In this way it is possible to maintain in a stand-by condition only the peripheral units which are useful to the process in progress and to "switch-off" completely the other peripherals during a **WFI** phase, for further reducing power consumption.

The second type of cells, namely **CELL_B**, which equips the processor block (**CPU**), the memory block and eventually also the **I/O PORTS** block, is shown in **Fig. 3**. This cell generates a single secondary clock signal **CKCM,** which is always interrupted during a **WFI** phase.

Finally the third type of cell, namely **CELL_C**, depicted in **Fig. 4**, supplies a clock signal to the **INTERRUPT/DMA** control block, and in particular applications, may also be present in the **I/O PORTS** block. This cell is substantially insensitive toward a **WFI** condition and always generates a clock signal **CK1.**

Basically the operation is as follows.

**Phase A** - The CPU receives a software instruction for a **WFI** and after having decoded it, sends a signal for requesting to enter into a **WFI** state to the relative control block, **INTERRUPT/DMA UNIT.**

**Phase B** - The control unit, **INTERRUPT/DMA UNIT,** transforms such a request into an operative action by activating the signal **WFI1.**

**Phase C** - At this point all the units (macroblocks) which must be set in a stand-by state, enter into a "power down" state, which beside arresting the respective clock signal, disables all the circuits which statically consume energy. In practice, during this phase, the control unit, **INTERRUPT/DMA UNIT,** which must detect the event following which the **CPU** must be returned to full activity, remains certainly active, as well as a restricted number of peripheral units which are utilized by the process in progress. In particular, it may happen that only the control unit, **INTERRUPT/DMA UNIT,** remains operative because the restoring in full activity the **CPU** is conditioned by an external interrupt channel.

**Phase D** - This phase, which is characteristic of the implementation of the present invention, relates to the situation whereby a peripheral unit requests the performance of a **DMA** transaction while a phase C, as described above, is in progress. In this case, the control unit, **INTERRUPT/DMA UNIT,** releases the signal **WFI1** thus permitting to the **CPU** to be restored to full activity and to attend to the procedure of the requested **DMA** transaction. At the end of the **DMA** transfer, the **CPU** questions the control unit, **INTERRUPT/DMA UNIT,** in order to learn whether the instruction for such a **DMA** transaction came during a state of **WFI** (phase C) and in the case of an affirmative answer, provides to generate a request for interrupt, which resets the microcontroller to a "power down" condition, thus returning to a phase C condition.

**Claims**

1. In a microprocessor system provided with DMA channels for the transfer of data in a DMA mode among physical data storage resources of the system, the improvement represented by the fact that a request for the performance of a procedure of data transfer in DMA mode is accepted also while the microprocessor is in a wait for interrupt state and is performed by restoring the microprocessor to full activity for the time necessary to perform said procedure and by returning the microprocessor to a wait for interrupt state for reducing power consumption.

2. A method for reducing power consumption by a microprocessor system provided with integrated DMA channels for transferring data in a DMA mode among physical data storage resources of the microprocessor system, which comprises

accepting a request instruction for a tranfer of data in DMA mode through said integrated DMA channels, while the microprocessor is in a wait for interrupt state;

an inner CORE clock of the microprocessor being momentarily restarted from a rest condition assumed during said wait for interrupt state by said request, for the time necessary to perform a relative procedure of data transfer in DMA mode through said DMA channels and being stopped again when said transfer is completed.

3. An integrated microcomputer comprising a central processing unit, a memory, an I/O management unit, at least a peripheral management unit, an interrupt and DMA mode data transfer control unit and a master clock signal generator, wherein each of said units is provided with a circuit, driven by said master clock signal, for generating at least a secondary clock signal, wherein

said unit for the management of a peripheral is provided with a circuit generating first and second secondary clock signals;

said first secondary clock signal driving a circuitry for interfacing said unit with said central processing unit and being stopped during a wait for interrupt state of said central processing unit;

said second secondary clock signal driving a circuitry which controls the functions of said peripheral and being stopped by means of a control signal for stopping and restarting the functions of said peripherals.

4. A microcomputer according to claim 3, wherein said circuit generating said first and second secondary clock signals has at least three inputs and two outputs;

said master clock signal being fed to a first of said three inputs, a signal generated by said interrupt and DMA mode data transfer control unit following a software request decoded by said central processing unit, is fed to a second input of said three inputs and said control signal for stopping and restarting the functions of said peripheral is fed to a third input of said three inputs;

said circuit having a first NOR gate which generates on a first output of the circuit a first secondary clock signal depending on said master clock signal and said signal generated by said interrupt and DMA transfer control unit, which are respectively fed to two inputs of said first NOR gate;

said circuit having a second NOR gate which produces on a second output of the circuit a second secondary clock signal depending on said master clock signal which is applied to a first input of said second NOR gate and an internal signal which is fed to a second input of said second NOR gate;

said internal signal being generated on the output of an inverter, to the input of which is fed the output signal of a NAND gate of the circuit, said NAND gate having a first input to which said control signal is fed and a second input to which said signal generated by said interrupt and DMA transfer control unit is fed.

CEL-A

CKPN1

CKM
WFI 1

MSKWFI 1

CKPN0

CKM

PERIPHERAL CLOCK DRIVER

FIG.2

CEL-B

CKCM

CKM
WFI 1

CPU & MEMORY CLOCK DRIVER

FIG.3

CEL-C

CK1

CKM

INT / DMA CLOCK DRIVER

FIG.4

MASTER CLOCK GENERATOR

CKM

CEL.B/C — I/O PORTS

CEL.A — PERIPHERAL (N)

CEL.A — PERIPHERAL (O)

CEL.B — MEMORY (ROM / EPROM / EEPROM / FLASH / RAM)

CEL.B — CENTRAL PROCESSING UNIT (CPU)

WFI 1

CEL.C — INTERRUPT / DMA UNIT

INT / DMA / BUS

FIG.1

7

European Patent
Office

## EUROPEAN SEARCH REPORT

Application Number

EP 91 83 0166

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.5) |
| P,X | EP-A-0 368 144 (MOTOROLA INC.) * Figure 1; page 10, lines 9-48 * | 1,2 | G 06 F 1/32 G 06 F 13/32 |
| P,A | | 3,4 | |
| | --- | | |
| A | US-A-3 758 945 (MOTOROLA INC.) * Figures 2,3; column 5, line 21 - column 6, line 26; claim 1 * | 1,2 | |
| | --- | | |
| A | EP-A-0 050 844 (HITACHI LTD) * Figures 1-4,8,9; page 6, line 26 - page 9, line 5; page 19, line 18 - page 22, line 3 * | 1-4 | |
| | --- | | |
| X | EP-A-0 229 692 (IBM CORP.) * Figure 1; page 3, left-hand column, line 38 - page 4, left-hand column, line 29 * | 1,2 | |
| | ------ | | |
| | | | TECHNICAL FIELDS SEARCHED (Int. Cl.5) |
| | | | G 06 F |

The present search report has been drawn up for all claims

| Place of search | Date of completion of the search | Examiner |
|---|---|---|
| THE HAGUE | 30-08-1991 | JONES H.D.B. |

EPO FORM 1503 03.82 (P0401)